# NEUE EUROPÄISCHE PATENTSCHRIFT

(11) **EP 1 773 534 B2**
(45) Veröffentlichungstag und Bekanntmachung des Hinweises auf die Entscheidung über den Einspruch: **09.12.2020**
(45) Hinweis auf die Patenterteilung: 10.05.2017
(21) Anmeldenummer: 05776184.3
(22) Anmeldetag: 04.08.2005
(51) Int. Cl.: B23K 26/02

(54) **LASEREINRICHTUNG UND BETRIEBSVERFAHREN**
LASER DEVICE AND OPERATING METHOD
DISPOSITIF LASER ET PROCÉDÉ DE FONCTIONNEMENT

(30) Priorität: 05.08.2004 DE 102004038310
(43) Veröffentlichungstag der Anmeldung: 18.04.2007
(73) Patentinhaber: Precitec GmbH & Co. KG, 76571 Gaggenau (DE)
(72) Erfinder: HÖLSCHER, Manfred, 86473 Ziemetshausen (DE); ENGLHARD, Anton, 86574 Petersdorf/Schönleiten (DE)
(74) Vertreter: Ter Meer Steinmeister & Partner
(86) Internationale Anmeldenummer: PCT/EP2005/008456
(87) Internationale Veröffentlichungsnummer: WO 2006/015795

(56) Entgegenhaltungen:
- EP-A1- 0 429 368
- EP-A1- 0 562 616
- WO-A1-01/66299
- WO-A1-03/004214
- CN-A- 1 286 654
- FR-A- 2 689 254
- JP-A- H 052 146
- JP-A- H1 158 059
- JP-A- H04 327 394
- JP-A- H07 303 978
- JP-A- H09 216 087
- JP-A- 2004 050 246
- US-A- 4 839 495
- US-A- 4 844 574
- US-A- 4 997 250
- US-A1- 2003 024 906
- US-B1- 6 353 203
- US-B1- 6 555 780
- US-B1- 6 593 540

## Beschreibung

Die Erfindung betrifft eine Lasereinrichtung und ein Verfahren zum Betrieb einer Lasereinrichtung mit den Merkmalen im Oberbegriff des Verfahrens- und Vorrichtungshauptanspruchs.
Derartige Lasereinrichtungen sind aus der Praxis bekannt. Sie weisen zumindest ein Laserwerkzeug auf, welches eine Laseroptik mit einer Fokussier- und einer Kollimationsoptik sowie einen Anschluss für einen Lichtwellenleiter aufweist. Der Lichtwellenleiter besitzt einen Leiterauskopplungspunkt, an dem der Laserstrahl austritt. Die vorbekannten Laserwerkzeuge haben feste Brennweiten der Laseroptik. Um den Fokus des Laserstrahls an der gewünschten Stelle im Werkstück zu haben und einen Brennpunkt mit der gewünschten Größe zu erzeugen, muss beim Stand der Technik auf den Arbeitsabstand zwischen Laserwerkzeug und Werkstück Einfluss genommen werden. Dies ist z.B. erforderlich, wenn das Laserwerkzeug seine Orientierung gegenüber dem Werkstück ändert und der Laserstrahl mit veränderlichen Winkeln auf das Werkstück trifft. Hierfür wird in der Regel das von einem Manipulator, insbesondere einem mehrachsigen Roboter, bewegte Laserwerkzeug entsprechend mechanisch nachgeführt.

Fasergekoppelte Laserquellen, z.B. Scheibenlaser oder Faserlaser mit hohen Strahlqualitäten (kleines Strahlparameterprodukt) besitzen in der Regel kleine Faserkerndurchmesser, die z.B. kleiner als 0,2 mm sind. Wegen dieser kleinen Faserkerndurchmesser reduziert sich die noch tolerierbare Abweichung der Fokuslage in Strahlrichtung (sog. Rayleigh-Länge) erheblich. Für eine Laseroptik mit einer Fokusbrennweite von 1400 mm und einer Kollimationslänge von 330 mm ergibt sich bei einem Faserlaser mit einem Strahlparameter von 4,3 mm x mrad und einem Faserkerndurchmesser von 0,1 mm eine noch tolerierbare Fokusabweichung in axialer Strahlrichtung von ca. ±10 mm. Dieser enge Toleranzbereich kann bei den besagten Orientierungsänderungen des Laserwerkzeugs schnell überschritten sein und zum Nachführen des Laserwerkzeugs durch entsprechende Manipulator- oder Roboterbewegungen führen. Dies erschwert die Programmierung des Manipulators. Außerdem zwingt die geringe Fokustoleranz zum Einsatz höherwertiger Manipulatoren mit einer größeren Achsenzahl, z.B. sechsachsiger Handhabungssysteme. Mit der Erhöhung der Achsenzahl steigt jedoch auch die Bahnungenauigkeit. Dies zwingt zum Einsatz höherwertiger Manipulatoren, insbesondere sechsachsiger Gelenkarmroboter. Dies führt zu höheren Kosten und auch zu einem erhöhten Raumbedarf als bei einfacheren Handhabungssystemen mit geringerer Achsenzahl.

Die festen Brennweiten der Laseroptik schränken die Bewegungsmöglichkeiten des Manipulators oder Roboters ein, weil sie die Einhaltung eines festen vorgegebenen Arbeitsabstandes erfordern. Je nach Einsatzfall kann dies wegen beschränkten Arbeitsräumen oder aus anderen Gründen zu Problemen führen. Als Ausweg bleibt nur der Austausch der Laseroptik und ein Wechsel der Fokusbrennweite. Dies bringt einen Mehraufwand an Zeit und Kosten mit sich. Außerdem bleibt auch bei einem Optikwechsel durch die nach wie vor feste Fokusbrennweite der Zwang zur Einhaltung eines vorgegebenen Arbeitsabstandes erhalten.

Aus der JP H04-327394 A ist eine Laserschneideinrichtung bekannt, die eine stationäre Laserquelle mit einem frei und ohne Lichtwellenleiter emittierten Laserstrahl und einen hiervon distanzierten, zweiachsig beweglichen Maschinenkopf mit einem Spiegel und einer Fokussieroptik sowie eine eigenständig bewegliche Kollimatoreinheit aufweist. Der Maschinenkopf wird relativ zu der Laserquelle und zur Kollimatoreinheit verstellt, um die gesamte Strahllänge von der Laserquelle bis zum Strahlauftreffpunkt am Werkstück zu beeinflussen. Bei den Maschinenkopfbewegungen wird der Durchmesser des Laserstrahls durch eine Änderung des Abstands zwischen einer konvexen und einer konkaven Linse in der Kollimatoreinheit konstant gehalten.

Die FR 2 689 254 A1 offenbart eine Lasereinrichtung mit einer stationären Kollimationslinse und einem in Axialrichtung sowie im Winkel verstellbaren Fasereinkoppelpunkt. Für die Justage der Lasereinrichtung wird der Fasereinkoppelpunkt manuell mit einer Schraubhülse und einer Schwenkverstellung eingestellt. Dies erfolgt von Hand und geschieht einmalig bei der Ersteinrichtung.

Die US 4,844,574 A zeigt ein Laserwerkzeug mit einer manuellen Einstellung des Abstandes einer Kollimationslinse vom Faserauskoppelpunkt mittels eines Gewindes, wobei dies einmalig bei der Ersteinrichtung und der Montage geschieht und die Kollimationslinse danach fixiert wird.

Aus der WO 03/004214 A1 ist eine Lasereinrichtung mit einem Laserkopf bekannt, in dem ein Anschluss für einen Lichtwellenleiter und eine Kollimationsoptik in einem festen Abstand zueinander angeordnet sind.

Die WO 01/66299 A1 zeigt eine Lasereinrichtung mit einem Laserkopf, in dem eine strahlformende Optik drehbar und dabei in Strahlrichtung stationär angeordnet ist.

Die EP 0 429 368 A1 betrifft eine Lasereinrichtung mit einer divergenten Linse zur Erzeugung eines elliptischen Strahlquerschnitts für mehrere verschiedene Fokuspunkte, die zur Fokusbeeinflussung manuell relativ zu einer nachfolgenden konvergenten Linse verstellbar ist.

Bei der aus der JP H05 2146 A bekannten Lasereinrichtung wird eine konvexe Linse motorisch relativ zu einer konkaven Linse verstellt.

Die EP 0 562 616 A1 offenbart eine Lasereinrichtung mit zwei plankonvexen Linsen, die mit ihren Wölbungen gegeneinander gerichtet und durch eine Distanzhülse in ihrem axialen Abstand einstellbar sind.

Es ist Aufgabe der vorliegenden Erfindung, eine verbesserte Lasertechnik aufzuzeigen.

Die Erfindung löst diese Aufgabe mit den Merkmalen im Verfahrens- und Vorrichtungshauptanspruch. Mit der erfindungsgemäßen Verfahrens- und Vorrichtungstechnik ist eine Änderung der Brennweite Ff der Fokussieroptik auf einfache Weise möglich, wobei die Brennweitenänderung schnell, kurzfristig und während des Betriebs stattfinden kann. Hierdurch kann das Laserwerkzeug seinen Arbeitsabstand gegenüber dem Werkstück in einem weiten Stellbereich ändern und wird hierdurch hoch flexibel. Dies vereinfacht die Programmierung von Manipulatoren und Robotern. Ein Nachführen der Brennweite und des Fokus kann auch bei Orientierungsänderungen des Laserwerkzeugs sehr schnell und zielgenau erfolgen, ohne dass hierzu der Manipulator oder Roboter mechanische Bewegungen ausführen muss.

Die Brennweitenänderung wird durch eine Verstellung des optischen Abstands b des Leiterauskoppelpunktes von der Kollimationsoptik bzw. durch eine Verstellung der Kollimationslänge verändert. Hierbei sind eine oder mehrere Stelleinrichtungen an der Kollimationsoptik angeordnet. Hierfür müssen jeweils nur kleine Massen bewegt werden, so dass eine relativ schwach ausgelegte Antriebstechnik genügt, die entsprechend schnell und zielgenau reagieren kann. Günstig ist außerdem, dass für die Brennweitenänderung ein positives Übersetzungsverhältnis gegeben ist. Kleine Änderungen des optischen Abstands b bewirken relativ große Änderungen der Fokusbrennweite. Dieses Übersetzungsverhältnis kommt wiederum der Geschwindigkeit und der Stellgenauigkeit der Stellvorrichtung entgegen.

Die erfindungsgemäße Lasertechnik bietet die Möglichkeit zur Realisierung eines Autofokus-Systems, welches ein sehr genaues und schnelles Nachführen des Fokuspunktes oder Brennflecks am Werkstück im Bearbeitungsbetrieb ermöglicht. Ferner ist es möglich, den Durchmesser des Brennflecks am Werkstück in der gewünschten Größe zu halten.

Zudem ergeben sich positive Auswirkungen auf die Verbesserung und Optimierung der Bearbeitungsgeschwindigkeit, insbesondere der Schweißgeschwindigkeit beim Laserschweißen. Das massenarme und schnelle Autofokus-System bietet höhere Genauigkeiten und Ansprechgeschwindigkeiten als der wesentlich trägere Manipulator. Dies ist insbesondere von Vorteil, wenn das Laserwerkzeug von einem Manipulator oder Roboter mit veränderlichen Orientierungen und Lasereinstrahlwinkeln am Werkstück geführt wird, wobei die Orientierungsänderungen vorzugsweise über eine Handachsenbewegung erfolgen. Trotz der sich ständig und sehr schnell ändernden Orientierungen und Einstrahlwinkel erlaubt das Autofokus-System eine hochpräzise Nachführung des Fokus- und Brennpunkts am Werkstück.

Diese Vorteile des Autofokus-Systems schlagen um so mehr durch, je höher die Strahlqualität der Laserquelle und je kleiner der Faserkerndurchmesser wird. Die bisherigen Toleranzprobleme mit der Rayleigh-Länge können dadurch überwunden werden. Vor allem für Laseroptiken mit einer längeren Ausgangs-Fokusbrennweite ergeben sich verbesserte Einsatzmöglichkeiten. Diese Laserwerkzeuge werden als sog. Remote-Laser eingesetzt und haben entsprechend große Arbeitsabstände zum Werkstück, wobei der Laserstrahl vornehmlich durch Orientierungsänderungen des Laserwerkzeugs und durch Winkelbewegungen entlang der zu verfolgenden Bahn am Werkstück bewegt wird.

Die beanspruchte Lasertechnik erlaubt außerdem eine Fokusshift-Kompensation. Hierbei können temperaturbedingte Veränderungen der Optik und damit einher gehende Verschiebungen des Fokuspunktes in Strahlrichtung kompensiert werden. Dies kann in einer Regelung automatisch in Abhängigkeit von der Optiktemperatur oder in bestimmten Wartungsintervallen durch manuelle Nachjustierung geschehen.

Durch die auf einfache Weise veränderliche Brennweite kann das Laserwerkzeug einen großen Brennweitenbereich und eine entsprechend große Variationsbreite der Arbeitsabstände abdecken. Die bisher erforderlichen Optikwechsel können völlig entfallen oder lassen sich auf ein kleineres Maß reduzieren. Insbesondere kann das gleiche Laserwerkzeug nun sowohl im Nahbereich, wie auch im Fernbereich als Remote-Laser eingesetzt werden. Durch die Brennweitennachführung ist es zudem möglich, den Manipulator zu vereinfachen und mit weniger Achsen auszurüsten.

Die beanspruchte Lasertechnik bringt ferner Vorteile beim Einrichten oder Teachen der Lasereinrichtung mit sich. Hierbei kann ein Pilotlaser mit einem eingekoppelten Pilotlaserstrahl im optisch sichtbaren Wellenlängenbereich verwendet werden. Die Unterschiede zwischen den Wellenlängen des Pilotlaserstrahls und des Arbeitslaserstrahls und das damit einhergehende unterschiedliche Brechungs- und Fokussierverhalten lassen sich über die Stelleinrichtung und die Brennweitennachführung mittels eines Offsets in der Stelleinrichtung kompensieren. Das Teachen ist dadurch auf besonders einfache, schnelle und sichere Weise möglich. Aufwändige Abstandsmesssysteme und dgl. sind entbehrlich. Insbesondere kann der Tool-Center-Point (TCP) des Laserwerkzeugs, der üblicherweise im Fokus liegt, sehr genau und einfach geteacht werden. Genauso einfach und sicher lässt sich die Korrelation und mathematische Verknüpfung zwischen der Änderung des optischen Abstands b und der Fokussierbrennweitenänderung sowie die zugehörige mathematische Verknüpfung mit der Manipulator- oder Robotersteuerung teachen. Durch den Anschluss der Stelleinrichtung an die Manipulator- oder Robotersteuerung können die Brennweitenänderungen prozessgerecht bei Bedarf in optimaler Weise durchgeführt und eingesetzt werden.

Ein wichtiger Gesichtspunkt der Erfindung ist auch die Möglichkeit, durch die oder bei der Brennweitenänderung gezielt den Durchmesser des Brennflecks am Werkstück einzustellen und zu steuern. Über die Autofokusfunktion kann dieser Durchmesser auch bei Änderungen des Arbeitsabstandes des Laserwerkzeugs vom Werkstück konstant gehalten werden. Hierdurch wird auch der örtliche Energieeintrag am Werkstück konstant gehalten, was für verschiedene Laserprozesse, z.B. das Laserschweißen, von Bedeutung ist. Je nach Prozesserfordernis ist es aber gleichfalls möglich, den Brennfleckdurchmesser gezielt zu verändern, um dadurch z.B. auch den Energieeintrag zu variieren. Die Änderung des Energieeintrags kann z.B. von Änderungen der relativen Fortbewegungsgeschwindigkeit des Brennflecks am Werkstück abhängen und hieran angepasst sein. Desgleichen ist auch eine Anpassung an unterschiedliche Einstrahlwinkel des Laserstrahls am Werkstück möglich. Je kleiner der Einstrahlwinkel zwischen Laserstrahl und Werkstückoberfläche ist, desto größer wird in der Projektion der Brennfleckdurchmesser und desto kleiner wird der Energieeintrag. Der Energieeintrag wird außerdem durch ein winkelabhängiges Einkoppelverhalten des Laserstrahls an der Werkstückoberfläche beeinflusst. Um diesen Veränderungen zu begegnen oder sich hieran anzupassen, kann durch eine Brennweitenänderung der Brennfleckdurchmesser beeinflusst und z.B. verkleinert werden. Diese Brennweitenänderung kann im Autofokusbetrieb ebenfalls über eine mathematische Verknüpfung mit der Bahnsteuerung des Manipulators erfolgen.

Für hohe Strahlqualitäten des Laserstrahls und die damit einhergehenden kleinen Divergenzwinkel kann die Anordnung einer Streuoptik im Strahlengang vor der Kollimationsoptik von Vorteil sein, um insbesondere für lange Brennweiten einen ausreichend großen Strahldurchmesser an der Kollimations- und Fokusieroptik zu erreichen. Eine ortsveränderliche Streuoptik mit einer eigenen Stelleinrichtung bietet darüber hinaus zusätzliche Möglichkeiten zur Beeinflussung der Brennfleckdurchmessers am Werkstück. Hierfür ist es günstig, die Streuoptik gemeinsam mit dem Anschluss des Lichtwellenleiters oder mit der Kollimationsoptik bzw. der aus Kollimations- und Fokussieroptik bestehenden Laseroptik im Strahlengang axial zu bewegen. Hierdurch ergibt sich ein breites Kennfeld, in dem der Brennfleckdurchmesser nach Wunsch verändert und an die Prozesserfordernisse angepasst werden kann. Die Verstellung der Streuoptik hat auch in einem relativ geringen Maß Einfluss auf die Brennweite, was zusätzlich ausgenutzt oder bei Nichtbedarf durch entsprechende Gegenbewegungen des Lichtleiteranschlusses und/oder der Kollimations- bzw. Laseroptik kompensiert werden kann.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: Eine Laserzelle mit einem Manipulator und einer Lasereinrichtung,
- Figur 2:: eine schematische Seitenansicht eines nicht unter die Ansprüche 1 und 8 fallenden Laserwerkzeugs,
- Figur 3 bis 5:: schematisch verschiedene Zustände bei Brennweitenänderungen,
- Figur 6 bis 8:: in schematischen Schrittdarstellungen die Vorgehensweise bei einem Teachen des Laserwerkzeugs,
- Figur 9:: ein erfindungsgemäßes Laserwerkzeug mit einer Streuoptik und mehreren Stelleinrichtungen,
- Figur 10 und 11:: Verstellbeispiele für eine Verstellung von Lichtleiteranschluss und Laseroptik,
- Figur 12 und 13:: Verstellbeispiele für eine Verstellung von Streuoptik und Laseroptik und
- Figur 14 bis 18:: Beeinflussungsbeispiele für den Brennfleckdurchmesser, wobei Figur 14 bis 16 nicht unter die Ansprüche 1 und 8 fallen.

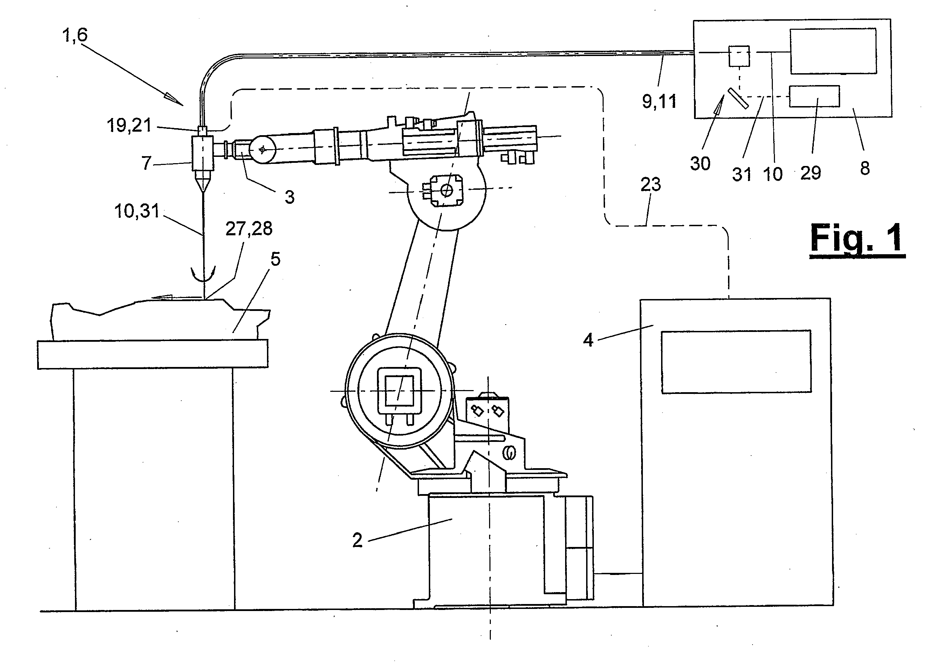

Figur 1 zeigt in einer schematischen Seitenansicht eine Laserzelle (1), die mit einer Lasereinrichtung (6) ausgerüstet ist. In der Laserzelle (1) werden ein oder mehrere Werkstücke (5) mit ein oder mehreren Laserstrahlen (10) in beliebiger Weise bearbeitet. Dies können z.B. Schweiß- oder Lötprozesse, Schneidprozesse, Kantenverrundungsprozesse oder dgl. sein.

Die Lasereinrichtung (6) umfasst mindestens ein Laserwerkzeug (7). Dieses ist in der gezeigten Ausführungsform mit einem Manipulator (2) verbunden, der beliebig viele Achsen haben kann. In der gezeigten Ausführungsform handelt es sich um einen sechsachsigen Gelenkarmroboter mit einer mehrachsigen Roboterhand (3), an der das Laserwerkzeug (7) befestigt ist. Der Roboter ist die höherwertige und mehrachsige Ausführung eines Manipulators (2). Alternativ kann der Manipulator (2) auch in anderer Weise, z.B. als lineares Kreuzschlittensystem mit zwei Achsen oder dgl. ausgebildet sein. Im einfachsten Fall hat der Manipulator (2) nur eine Achse. Die Achse(n) kann/können in beliebiger Art und Kombination rotatorische und/oder translatorische Achsen sein.

Der Manipulator (2) hat eine Steuerung (4), die in der gezeigten Ausführungsform als Robotersteuerung ausgebildet ist. In der programmierbaren und mit entsprechenden Recheneinheiten sowie Datenspeichern ausgerüsteten Steuerung (4) ist u.a. eine vorprogrammierte Bahn gespeichert, entlang der der Manipulator (2) das Laserwerkzeug (7) relativ zum Werkstück (5) führt.

In einer nicht dargestellten Variante kann das Laserwerkzeug (7) stationär angeordnet sein, wobei der Manipulator (2) ein Werkstück (5) relativ zum Laserwerkzeug (7) führt. In einer dritten Variante können Laserwerkzeug (7) und Laserwerkstück (5) von zwei Manipulatoren (2) relativ zueinander bewegt werden.

Die Lasereinrichtung (6) umfasst ferner mindestens eine Laserquelle (8), in der mindestens ein Arbeitslaserstrahl (10) erzeugt und über eine Leitung (9) dem Laserwerkzeug (7) zugeführt wird. In der Laserzelle (1) können mehrere Laserwerkzeuge (7) mit einer gemeinsamen Laserquelle (8) und einer Strahlumschalteinrichtung vorhanden sein. Die Leitung (9) kann in beliebig geeigneter Weise ausgebildet sein. Es kann sich hierbei um ein Lichtleitkabel, ein Röhren- und Spiegelsystem oder eine andere beliebige Ausführungsform handeln. Zumindest am Ende der Leitung (9) wird der Laserstrahl in einen Lichtwellenleiter (11) eingekoppelt, der vorzugsweise als Lichtleitfaser ausgebildet ist. Der Lichtwellenleiter (11) kann sich auch bis zur Laserquelle (8) erstrecken. Am vorderen Ende des Lichtwellenleiters (11) tritt der Laserstrahl (10) an einem Leiterauskoppelpunkt (12) aus. Der Durchmesser der Leitfaser oder des sog. Faserkerns ist vorzugsweise kleiner als 0,2 mm. In einer besonders günstigen Ausführungsform beträgt er 0,1 mm.

Die Laserquelle (8) kann von beliebig geeigneter Bauart sein. Vorzugsweise handelt es sich um einen Scheibenlaser oder Faserlaser mit einer hohen Strahlqualität. Dies bedeutet eine starke Strahlbündelung und eine geringe Divergenz des Laserstrahls (10). Die Divergenz oder das sog. Strahlparameterprodukt ist vorzugsweise kleiner als 5. Es definiert sich als Produkt aus 1/4 Faserkerndurchmesser x Divergenzwinkel des Laserstrahls.

Der Durchmesser des Brennpunkts (28), mit dem der Laserstrahl (10) auf die Oberfläche des Werkstücks (5) auftrifft, sollte prozessbedingt gewisse Größen einhalten. Dieser Brennpunktdurchmesser wird auch als Spotdurchmesser bezeichnet. Zum Schweißen ist z.B. ein Spotdurchmesser von ca. 0,6 mm vorteilhaft. Dieser Spotdurchmesser berechnet sich als Produkt aus dem Faserkerndurchmesser und dem Quotienten von Fokussierbrennweite Ff zu Kollimationsbrennweite Fk. Je kleiner beim gewünschten Spotdurchmesser der Faserkerndurchmesser ist, desto größer sollte proportional die Fokussierbrennweite sein. Alternativ oder kombinativ kann auch die Kollimationsbrennweite verkleinert werden. Ferner ist eine Beeinflussung des Spotdurchmessers durch eine Streuoptik (35) möglich.

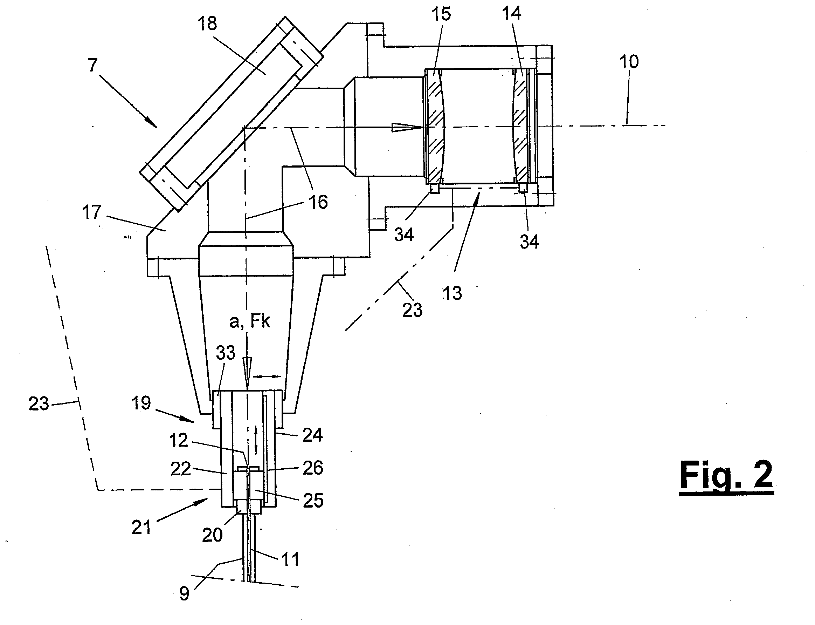

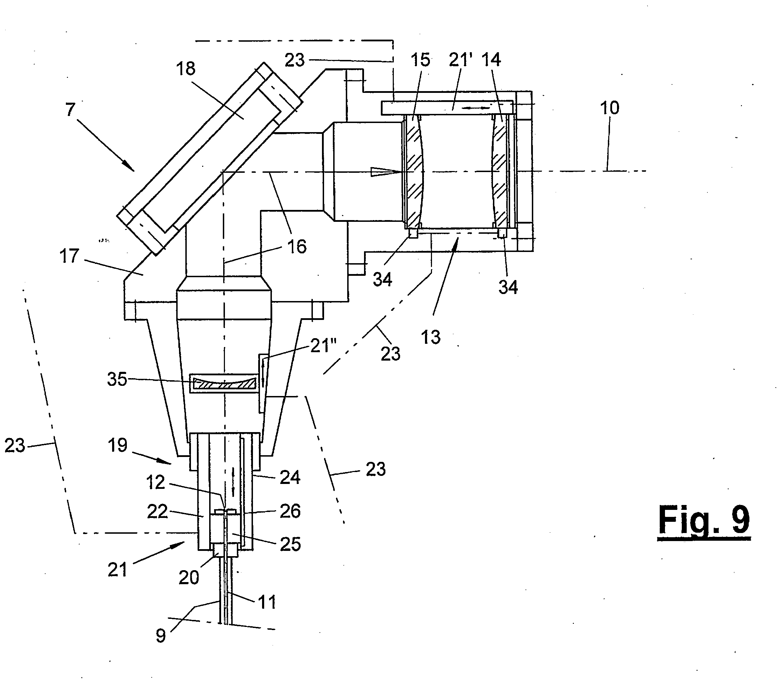

Das in Figur 2 dargestellte und nicht unter die Ansprüche 1 und 8 fallende Laserwerkzeug (7) besitzt ein mit der Roboterhand (3) oder einem anderen Manipulatoranschluss verbindbares Gehäuse (17), in dem eine Laseroptik (13) mit einer Fokussieroptik (14) und einer Kollimationsoptik (15) sowie ein Anschluss (19) für den Lichtwellenleiter (11) angeordnet sind. In Figur 9 ist zudem eine Streuoptik (34) im Strahlengang (16) zwischen dem Anschluss (19) für den Lichtwellenleiter (11) und der Kollimationsoptik (15) angeordnet.

Die genannten Optiken (13,14,15,34) können in beliebiger Weise ausgebildet sein. Z.B. können dies transmissive Optiken, z.B. Linsen, oder reflektive Optiken, z.B. Spiegel, sein. In den dargestellten Ausführungsbeispielen kommen Linsensysteme zum Einsatz.

In Figur 2 und 9 ist das Gehäuse (17) abgewinkelt, wobei der Laserstrahl an einem schrägen Spiegel (18) umgelenkt wird. Alternativ kann das Gehäuse (17) eine gestreckte Gestalt ohne Spiegel haben. Die Laseroptik (13) ist bei Figur 2 ortsfest im Gehäuse (17) angeordnet. Es ist von Vorteil, wenn die Kollimationsoptik (15) sich nahe an der Fokussieroptik (14) befindet. In Figur 2 und 9 sind beide Optiken (13,14) in enger Nachbarschaft am einen Gehäuseschenkel mit Abstand hinter dem Spiegel (18) in Strahlrichtung (16) gesehen angeordnet.

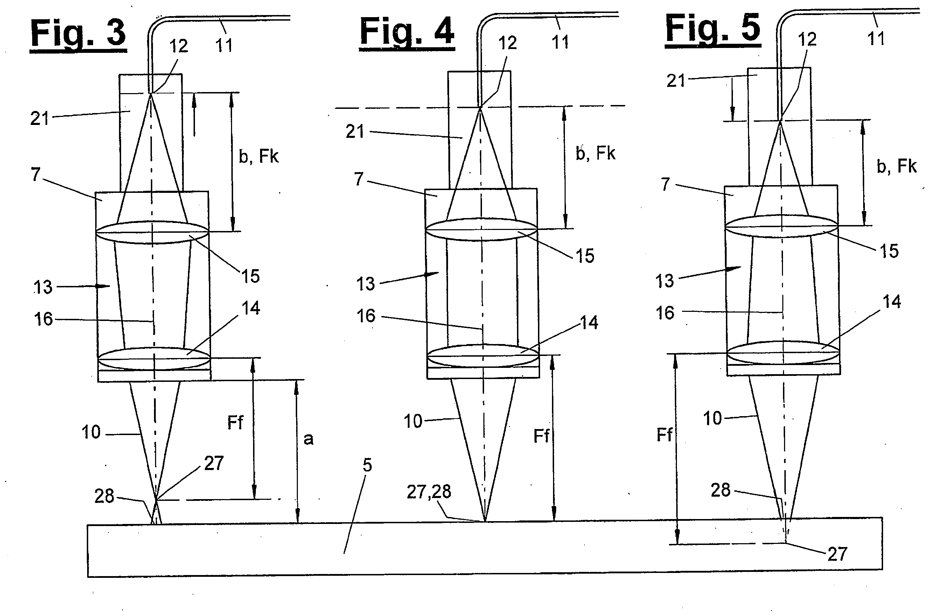

Das Laserwerkzeug (7) besitzt mindestens eine Stelleinrichtung (21,21') zum Verstellen des optischen Abstands b des Leiterauskoppelpunktes (12) von der Kollimationsoptik (15). Die Abstandsänderung bewirkt wegen der Strahlaufweitung und des veränderten Einfallwinkels an der Kollimationsoptik (15) eine Winkeländerung der Laserstrahlung hinter der Kollimierung. Figur 3 bis 5 verdeutlichen dies schematisch. Je nach Verschieberichtung wird die Laserstrahlung divergent oder konvergent. Die Winkeländerung der Laserstrahlung wirkt sich auch hinter der Fokussieroptik (14) aus. Hier findet ebenfalls eine Strahländerung in den divergenten oder konvergenten Bereich mit der Folge einer Verschiebung der Fokuslage in Strahlrichtung (16) statt. Ein Verstellen des optischen Abstands b in Strahlrichtung (16) führt somit zu einer Veränderung der Brennweite Ff der Fokussieroptik (14).

Die Relativverstellung des optischen Abstands b kann auf verschiedene Weise durchgeführt werden. In einem nicht unter Anspruch 1 und 8 fallenden Beispiel von Figur 1 bis 8 ist die Stelleinrichtung (21) am Anschluss (19) angeordnet und verschiebt den Leiterauskoppelpunkt (12) in Strahlrichtung (16). Alternativ oder zusätzlich wird gemäß der anspruchsgemäßen Ausführungsform von Figur 9 die Kollimationsoptik (15) durch eine entsprechende Stelleinrichtung (21') in Strahlrichtung (16) verschoben. Vorzugsweise wird hierbei die Kollimationsoptik (15) gemeinsam mit der Fokussieroptik (14), d.h. die ganze Laseroptik (13), verschoben.

Figur 9 zeigt außerdem eine Variante, bei der eine Streuoptik (35) im Strahlengang (16) zwischen dem Anschluss (19) für den Lichtwellenleiter und der Kollimationsoptik (15) angeordnet ist. Diese Streuoptik (35) bewirkt eine Aufweitung des vom Auskoppelpunkt (12) austretenden Laserstrahls (10) und eine Vergrößerung des Divergenzwinkels. Hierfür ist die Streuoptik (35) vorzugsweise nahe am Leiterauskoppelpunkt (12) und in Strahlrichtung (16) vor dem Umlenkspiegel (18) angeordnet. Die Aufweitung des Laserstrahls (10) bewirkt ebenfalls eine Brennweitenänderung. Dieser Einfluss ist allerdings geringer als der Einfluss durch die Veränderung des optischen Abstands b. Vor allem birgt die Streuoptik (35) eine Veränderung des Spotdurchmessers im Brennpunkt (28). Die Streuoptik (35) kann hierfür eine eigene Stelleinrichtung (21") besitzen. Sie kann alternativ beweglich gelagert sein und über eine Koppelung gemeinsam mit dem Leiterauskoppelpunkt (12) oder der Kollimationsoptik (15) bzw. der ganzen Laseroptik (13) verschoben werden.

Die Stelleinrichtung (21) besitzt einen steuerbaren Linearantrieb (22), der eine axiale Verschiebung des Leiterauskoppelpunkts (12) in Strahlrichtung (16) erlaubt. Der steuerbare Linearantrieb (22) ist als sog. Linearachse ausgebildet. Er besitzt z.B. ein hohles Antriebsgehäuse (24), welches längs der Strahlrichtung (16) ausgerichtet ist. Im Antriebsgehäuse (24) ist innenseitig ein Stellglied (25) angeordnet, an dem der Lichtwellenleiter (11) befestigt ist. Das Stellglied (25) lässt sich axial in Strahlrichtung (16) über ein entsprechendes Antriebselement motorisch verschieben. Die Antriebsgestaltung kann in beliebig geeigneter Weise ausgebildet sein, z.B. mit einem induktiven Linearantrieb, einem Hohlspindelantrieb oder dgl. Als motorisches Antriebselement kommen elektromotorische Komponenten, wie Spulen, Elektromotoren oder dgl. in Betracht. Grundsätzlich kann der Linearantrieb (22) allerdings in beliebig geeigneter anderer Weise ausgebildet sein.

Der Lichtwellenleiter (11) besitzt am freien Ende eine Leiteraufnahme (20), die z.B. als Faserstecker ausgebildet ist und an deren Vorderende der Leiterauskoppelpunkt (12) angeordnet ist. Der Faserstecker ist am Stellglied (25) vorzugsweise lösbar befestigt und wird von diesem längs der Strahlrichtung (16) motorisch vor- und zurückbewegt. Pfeile verdeutlichen die Bewegungsrichtungen. Der Faserstecker ist vorzugsweise innenseitig am Stellglied (25) gehalten, so dass der Auskoppelpunkt (12) frei liegt und einen freien und ungehinderten Austritt des Laserstrahls (10) ermöglicht.

Der Linearantrieb (22) besitzt eine Messeinrichtung (26) zur Wegmessung des Stellglieds (25). Hierüber kann auch eine genaue Positionierung des Stellglieds (25) an der gewünschten Stelle und zur Einstellung des optischen Abstands b erfolgen. Der optische Abstand b ist aus den Schemadarstellungen von Figur 3 bis 5 ersichtlich.

Der Linearantrieb (22) ist in der vorerwähnten Weise mittels einer Leitung (23), insbesondere einer elektrischen Signal- oder Steuerleitung, mit der Steuerung (4) verbunden. Die Datenübertragung kann alternativ auch drahtlos per Funk, Infrarot oder dgl. geschehen. In weiterer Abwandlung kann der Linearantrieb (22) eine eigene komplette Steuerung oder zumindest Teile einer solchen Steuerung beinhalten und ist dazu mit mindestens einer Recheneinheit oder mit mindestens einem Datenspeicher für Programme, Wegmesswerte und nachfolgend erläuterte Offset-Werte (32) ausgerüstet.

Über die Steuerung ist die Stelleinrichtung (21) fernsteuerbar. Die Ansteuerung kann hierbei vollautomatisch über die integrierte oder externe Steuerung (4) oder auch manuell über entsprechende Bedientasten oder andere Eingabemittel von einem Bediener durchgeführt werden.

Die Stellantriebe (21',21") der Kollimations- bzw. Laseroptik (15,13) und der Streuoptik (35) können in der gleichen vorbeschriebenen Weise wie der Stellantrieb (21) des Leiterauskoppelpunktes (12) ausgebildet sein. Die Optiken (13,15,35) weisen hierzu entsprechend geeignete axial bewegliche Lagerungen im Gehäuse (17) auf. Die verschiedenen Stelleinrichtungen (21,21',21") können eigenständig gesteuert sein, z.B. über getrennte eigene Steuerungen oder über eine gemeinsame Steuerung (4). Hierbei kann allerdings eine gegenseitige Abhängigkeit bestehen, worauf nachfolgend noch im einzelnen eingegangen wird.

Am Anschluss (19) kann ferner eine Justiereinrichtung (33) angebracht sein, die eine Querstellung des Linearantriebs (22) und somit eine Querjustierung des Laserstrahls (10) gegenüber der Laseroptik (13) und einer eventuell vorhandenen Austrittsdüse am vorderen Ende des Laserwerkzeugs (7) ermöglicht. Die Justiereinrichtung (33) kann manuell bedienbar sein. Sie kann alternativ einen geeigneten Justierantrieb besitzen. Justiermöglichkeiten sind in der Querebene zum Strahlengang (16) in vorzugsweise zwei Achsen möglich.

Wegänderungen der Stelleinrichtung(en) (21,21',21") und eine entsprechende Änderung des optischen Abstands b führen durch eine optische Übersetzung zu wesentlich größeren Änderungen im Abstand des Fokus (27) von der Fokussieroptik (14) bzw. in der Brennweite Ff der Fokussieroptik (14). Hierfür ist es von Vorteil, wenn die Fokussieroptik (14) im optischem Aufbau der Linsen und anderen Optikelemente mit einer großen Ausgangsbrennweite von vorzugsweise mindestens 500 mm oder mehr ausgestattet ist. Außerdem ist vorzugsweise die Brennweite Fk der Kollimationsoptik (15) kleiner als die Fokussierbrennweite Ff. In einer praktikablen Ausführungsform beträgt z.B. die Fokussierbrennweite Ff mehr als 1000mm, z.b. 1400mm, wobei die Kollimationsbrennweite Fk bei ca. 300mm, z.B. 330mm, liegt. Bei derartigen optischen Verhältnissen können kleine axiale Verschiebungen der Stelleinrichtung(en) (21,21',21") von z.B. 20 mm zu großen Brennweitenänderungen und Fokusverschiebungen von mehr als 1 m führen. Die Stelllänge der Stelleinrichtung(en) (21,21',21") und des Linearantriebs (22) ist wählbar und wird auf die gewünschte Variationsbreite der Fokussierbrennweite Ff abgestimmt.

Die Stelleinrichtung(en) (21,21',21") kann/können ein Autofokus-System bilden. Hierfür werden in der Steuerung (4) die Bewegungen der Stelleinrichtung(en) (21,21',21") bzw. des oder der Linearantriebe (22) und des Manipulators (2) miteinander mathematisch verknüpft. Die Steuerung (4) steuert dadurch die Axialbewegungen des Linearantriebs (22) an und kennt umgekehrt die Position und die axialen Wege des Leiterauskoppelpunktes (12) und/oder der Kollimationsoptik und/oder der Streuoptik (35) und somit auch die hierüber veränderbaren optischen Abstände b zur Kollimationsoptik (15). Über die mathematische Verknüpfung können die Bewegungen der Stelleinrichtung(en) (21,21',21") und des Manipulators (2) gekoppelt werden. Eine Verlagerung des Fokus (27) in Strahlrichtung (16) kann dadurch sowohl durch eine entsprechende Manipulatorbewegung in Strahlrichtung (16), als auch durch eine Änderung des optischen Abstands b und eine damit einhergehende Brennweitenänderung Ff erzielt werden. Diese Beeinflussungsmöglichkeiten können alternativ oder kombinativ durchgeführt werden und werden von der Steuerung (4) beeinflusst.

Figur 3 bis 5 verdeutlichen die Änderungen der Fokussierbrennweite Ff durch Änderung des optischen Abstands b, z.B. durch Verschiebung des Leiterauskoppelpunkts (12). Figur 4 zeigt den Idealfall, indem der Fokus (27) im Brennpunkt (28) oder in dessen unmittelbarer Nachbarschaft am Werkstück (5) liegt, so dass sich der für den jeweiligen Bearbeitungsprozess erforderliche oder gewünschte Spotdurchmesser ergibt. Der Arbeitsabstand a zwischen Laserwerkzeug (7) und der Werkzeugoberfläche mit dem Brennpunkt (28) ist hierbei entsprechend groß.

In der Variante von Figur 3 liegt eine Überfokussierung vor. Bei gleichem Arbeitsabstand a liegt der Fokus (27) oberhalb der Werkstückoberfläche, so dass der nach dem Fokus (27) wieder divergente Laserstrahl (10) auf der Werkstückoberfläche einen Brennpunkt (28) mit einem vergrößerten Spotdurchmesser erzeugt. Wie aus dem Vergleich zwischen Figur 3 und 4 hervorgeht, erfolgt diese Überfokussierung durch z.B. eine Ausfahrbewegung des Leiterauskoppelpunktes (12) und eine Vergrößerung des optischen Abstands b. Entsprechend der Überfokussierung verkürzt sich auch die Fokussierbrennweite Ff.

Figur 5 zeigt den anderen Fall einer Unterfokussierung, in der der Fokus (27) unterhalb des Brennpunktes (28) und somit im Inneren des Werkstücks (5) liegt. In diesem Fall ist die Fokussierbrennweite Ff vergrößert. Dies geht einher mit z.B. einer Einfahrbewegung des Leiterauskoppelpunktes (12) und einer entsprechenden Verkürzung des optischen Abstands b. Auch hier ist ansonsten der Arbeitsabstand a des Laserwerkzeugs (7) gleich wie in den beiden anderen Darstellungen von Figur 3 und 4.

Die Stelleinrichtung (21) kann in verschiedener Weise benutzt werden. Einerseits lässt sich in der z.B. eingangs beschriebenen Art der Fokus (27) exakt auf die Werkstückoberfläche (5) und in den Brennpunkt (28) oder zumindest in dessen unmittelbare Nachbarschaft legen. Andererseits ist es möglich, den Spotdurchmesser des Brennpunkts (28) auf gewünschte Werte einzustellen und dabei zu verkleinern oder zu vergrößern. Durch diese Durchmesseränderung kann unterschiedlichen Prozesserfordernissen Rechnung getragen werden. Zum Schweißen werden beispielsweise andere Spotdurchmesser als zum Schneiden oder zum Löten eingesetzt. Außerdem kann auch eine Durchmesseränderung innerhalb eines Laserprozesses sinnvoll sein. Hierdurch kann z.B. beim Schweißen unterschiedlichen Nahtgeometrien Rechnung getragen werden. Es ist ferner möglich, auf veränderliche Einstrahlwinkel des Laserstrahls (10) am Werkstück (5) und eine entsprechend geändertes Einkoppelverhalten zu reagieren. Außerdem kann der Energieeintrag am Werkstück (5) in der gewünschten Weise gesteuert werden. Ein vergrößerter Spotdurchmesser mindert die Energiedichte. Durch eine Änderung der Energiedichte ändert sich das Aufheizverhalten am Werkstück, was z.B. Einfluss auf die Schmelzebildung oder dgl. hat. Durch Variation des Spotdurchmessers kann z.B. auch auf unterschiedliche Werkstoffe reagiert werden.

Die in Figur 3 bis 5 gezeigten Änderungen des optischen Abstands b und der Fokussierbrennweite Ff werden anspruchsgemäß durch eine Verschiebung der Kollimationsoptik (15) in Strahlrichtung (16) erreicht. In weiterer Abwandlung ist es möglich, sowohl den Leiterauskoppelpunkt (12), als auch die Kollimationsoptik (15) zu verschieben und beide Verschiebebewegungen durch eine interne oder externe Steuerung (4) aufeinander abzustimmen. Wenn mit der Kollimationsoptik (15) auch die Fokussieroptik (14) im gleichen Maß verschoben wird, ist außerdem bei der Steuerung eine mit der Fokussieroptikbewegung einhergehende Fokusverschiebung zu berücksichtigen.

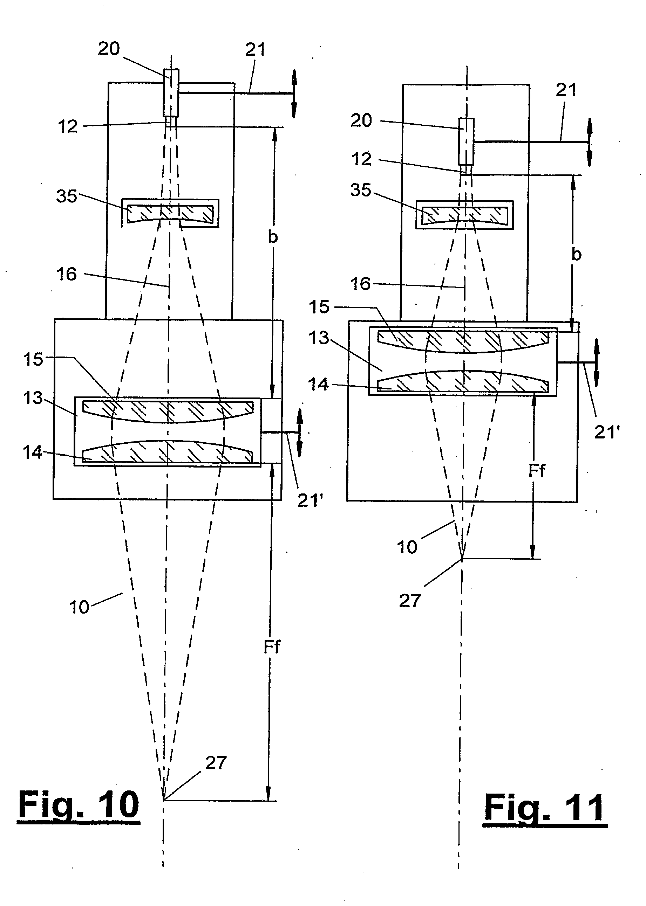

Figur 10 und 11 zeigen eine solche Ausführungsform in Verbindung mit einer Streuoptik (35) und Stelleinrichtungen (21,21') an der Leiteraufnahme (20) und an der Laseroptik (15). Die Streuoptik (35) bleibt in diesem Ausführungsbeispiel ortsfest im Strahlengang. Figur 10 zeigt die Variante mit einem großen optischen Abstand b und entsprechend großer Fokussierbrennweite Ff. Figur 11 verdeutlicht den durch gegenseitige Annäherung von Leiteraufnahme (20) und Laseroptik (13) verringerten optischen Abstand b und die damit einhergehende Verkürzung der Fokussierbrennweite Ff. Aus Figur 10 und 11 geht außerdem hervor, dass die Stellantriebe (21,21') relativ kleine einzelne Stellwege in gleichen oder unterschiedlich Richtungen haben können, wobei sich durch deren Überlagerung aber wesentlich größere Änderungen des optischen Abstands b erzielen lassen, insbesondere bei entgegen gesetzten Bewegungsrichtungen. Diese doppelte Stellmöglichkeit ist günstig für die Minimierung der Baugröße des Laserwerkzeugs (7). In diese Richtung wirkt sich auch die Streuoptik (35) positiv aus, weil sie auch bei kleiner Baugröße eine genügend große Aufweitung des Laserstrahls (10) ermöglicht.

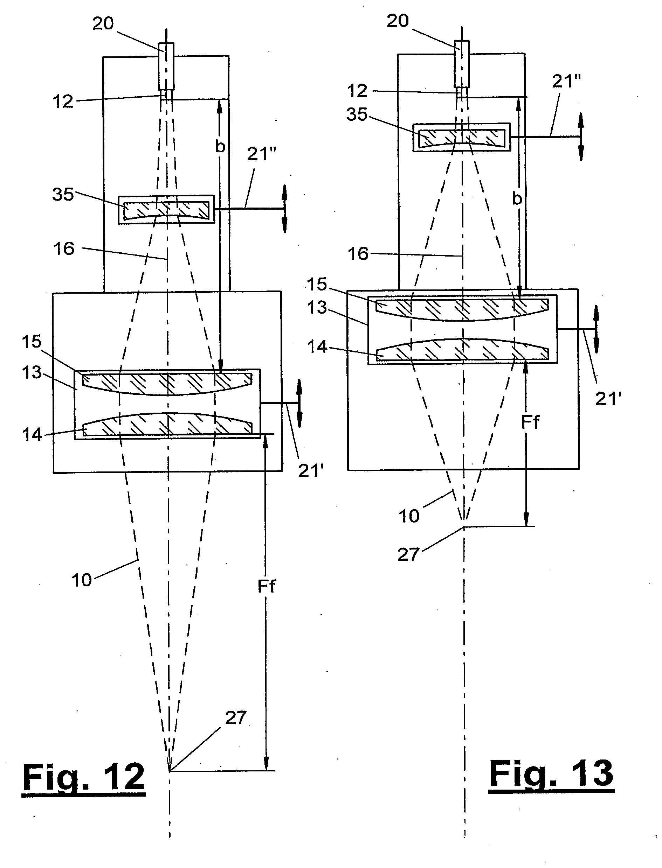

Figur 12 und 13 zeigen eine weitere Variante, in der die Leiteraufnahme (20) und der Leiterauskoppelpunkt (12) ortsfest gehalten sind und die Streuoptik (35) sowie die Laseroptik (13) mit Stelleinrichtungen (21",21') in Strahlrichtung (16) bewegt werden. Hierbei ist es günstig, die beiden Optiken (13,35) jeweils in gleicher Richtung zu bewegen. Wenn die Laseroptik (13) dem Leiterauskoppelpunkt (12) angenähert und der optische Abstand b verkürzt wird, bewegt sich auch die Streuoptik (35) in Richtung zum Leiterauskoppelpunkt (12). Umgekehrt bewegt sich die Streuoptik (35) bei einer Vergrößerung des Abstands b zur Laseroptik (13) hin. Aus dem Vergleich von Figur 10,11 und Figur 12,13 geht hervor, dass sich mit beiden Vorgehensweisen gleichwertige Änderungen der Fokussierbrennweite Ff bewirken lassen.

In einem nicht unter Anspruch 1 und 8 fallenden Beispiel ist es möglich, den optischen Abstand b zwischen dem Leiterauskoppelpunkt (12) und der Kollimationsoptik (15) bzw. der Laseroptik (13) konstant zu lassen und nur die Streuoptik (35) in Strahlrichtung (16) zu bewegen. Dies führt zu einer Änderung des Divergenzwinkels des an der Kollimationsoptik (15) auftreffenden Laserstrahls (10), was wiederum eine Veränderung des Konvergenzwinkels des fokussierten Laserstrahls (10) am Auftreffpunkt (28) am Werkstück (5) zur Folge hat. Hierbei ergibt sich auch eine geringfügige Fokusverschiebung und ggf. eine bewusste oder in Kauf genommene Defokussierung.

Änderungen des Spotdurchmessers ohne allzu große Fokusverschiebungen können z.B. bei Laserstrahlen (10) verwendet werden, die mit veränderlichen Einstrahlwinkeln am Werkstück auftreffen, wobei sich in der Projektion unter den verschiedenen Einstrahlwinkeln unterschiedlich große projizierte Brennflecken ergeben. Eine vom Einstrahlwinkel abhängige Verschiebung der Streuoptik (35) kann diese projektionsbedingten Spotgrößenänderungen kompensieren. Dies wird durch die vorerwähnte mathematische Verknüpfung der Manipulatorbewegungen und der Stelleinrichtung (21") in der Steuerung (4) bewirkt. Das Autofokussystem umfasst somit auch eine isolierte Verstellung der Streuoptik (35).

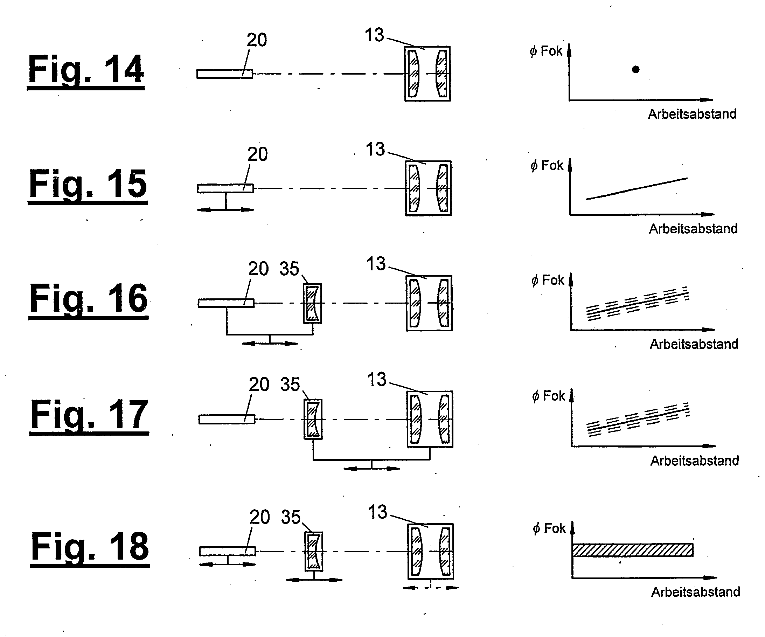

Figur 14 bis 18 verdeutlichen in Diagrammen eine Nutzwertanalyse für die vorgenannten Verstellmöglichkeiten. Figur 14 zeigt den Stand der Technik mit einem festen optischen Abstand b und einer ortsfesten Anordnung von Laseroptik (13) und Leiteraufnahme (20). In diesem Fall sind die Fokussierbrennweite Ff und der Arbeitsabstand a des Laserwerkzeugs (7) festgelegt, so dass sich für den einen Wert eine feste Größe des Spotdurchmessers ergibt. Figur 15 zeigt das nicht unter Anspruch 1 und 8 fallende Beispiel von Figur 1 und 2 mit der beweglichen Leiteraufnahme (20) und der ortsfesten Laseroptik (13). Bei dieser Anordnung ergibt sich eine im Wesentlichen gerade und schräg ansteigende Kennlinie für die Zunahme des Spotdurchmessers in Abhängigkeit von der veränderlichen Fokussierbrennweite Ff und dem dementsprechend änderbaren Arbeitsabstand a. In dem nicht unter Anspruch 1 und 8 fallenden Beispiel von Figur 16 sind die Leiteraufnahme (20) und die Streuoptik (35) gekoppelt und können gemeinsam gegenüber der ortsfesten Laseroptik (13) bewegt werden. Dies führt zu einer ähnlichen Kennlinie wie von Figur 15, die allerdings wegen der Streuoptik (35) steiler verlaufen kann. Außerdem kann diese Kennlinie parallel nach oben und unten verschoben werden, wenn die Streuoptik (35) eigenständig gegenüber der Leiteraufnahme bewegt und in ihrem Abstand verändert wird.

Figur 17 zeigt eine anspruchsgemäße Ausführungsform mit einem ähnlichen Verhalten wie bei Figur 16, wobei hier allerdings die Streuoptik (35) gemeinsam mit der Laseroptik (13) gegenüber der relativ ortsfesten Leiteraufnahme (20) bewegt wird. Durch eine eigenständige Beweglichkeit der Streuoptik (35) gegenüber der Leiteraufnahme (20) kann auch hier die Kennlinie parallel nach oben und unten verschoben werden. Figur 18 zeigt ein Beispiel mit Änderungen gegenüber Figur 16 und 17. In Figur 16 und 17 ist die Streuoptik (35) an die Leiteraufnahme (20) oder die Laseroptik (13) gekoppelt und führt gemeinsam mit dieser Verschiebebewegungen aus. Allerdings kann hierbei der Abstand innerhalb der Koppelung eingestellt und verändert werden, so dass sich die besagten Verschiebungen der Kennlinie ergeben. In Figur 18 ist die Streuoptik (35) durch einen eigenen Stellantrieb (21") frei und eigenständig beweglich gegenüber der ebenfalls eigenständig beweglichen Leiteraufnahme (20). Alternativ oder zusätzlich zur Leiteraufnahme (20) ist die Laseroptik (13) anspruchsgemäß beweglich. Hierdurch ergibt sich das im Diagramm dargestellte Kennfeld für die Veränderungen des Arbeitsabstandes und des hierbei ebenfalls einstellbaren Spotdurchmessers.

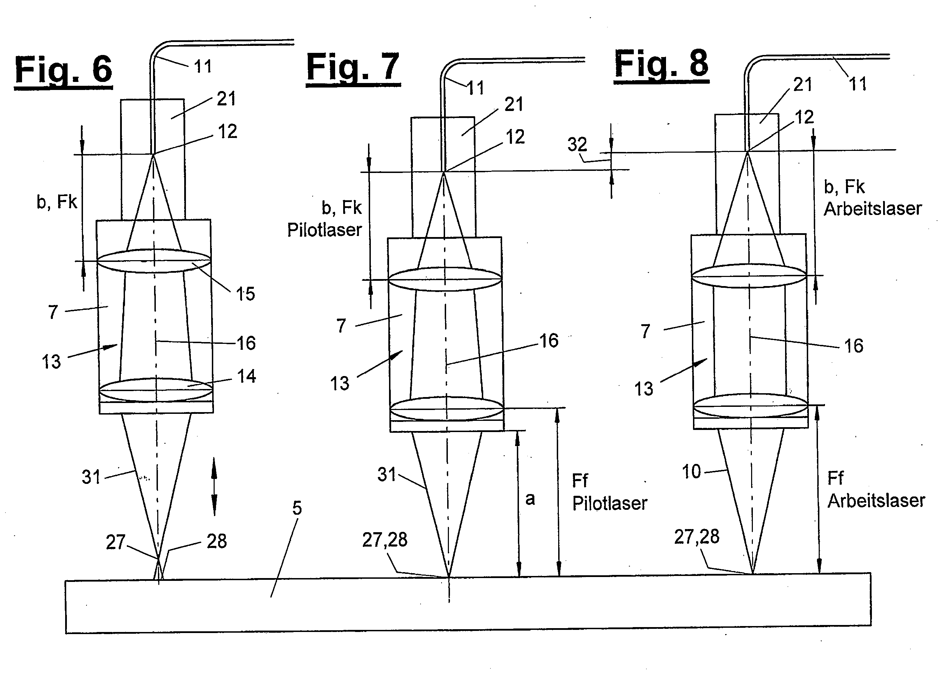

Figur 6 bis 8 verdeutlichen die Vorgehensweise bei einem Teachen des Laserwerkzeugs (7) bzw. der Stelleinrichtung(en) (21,21',21"), was insbesondere in Verbindung mit einem Autofokus-System unter Anbindung an die Manipulatorsteuerung (4) von Vorteil ist. Damit das Autofokus-System die Fokussierbrennweite Ff in der gewünschten Weise präzise und kontinuierlich verstellen und nachführen kann, ist der TCP zu teachen und einzustellen. Üblicherweise liegt der TCP im Fokus (27), wobei in diesem Punkt auch ein Koordinatensystem für die Bahnverfolgung aufgespannt wird. Um den Manipulator (2) und den Arbeitsabstand a korrekt steuern zu können, muss die Steuerung (4) den TCP und den Fokus (27) zur Deckung bringen. Der TCP hat auch eine bestimmte und in der Steuerung vorgegebene Lage bezüglich Abstand und Orientierung gegenüber mindestens einem anderen Manipulatorbezugspunkt, z.B. einem Flanschbezugspunkt in der Manipulatorhand (3), indem ein Flanschkoordinatensystem aufgespannt ist. Der Flanschbezugspunkt hat seinerseits wiederum eine bestimmte Lagebeziehung zu einem Manipulatorfußpunkt und einem dortigen World-Koordinatensystem.

Zum Teachen wird mit einem Pilotlaserstrahl (31) gearbeitet, der eine im sichtbaren Bereich liegende Wellenlänge,von z.B. 633 nm besitzt. Der Arbeitslaserstrahl (10) hat demgegenüber eine wesentlich größere Wellenlänge von ca. 1060 bis 1080 nm, die im nicht sichtbaren Infrarotbereich liegt. Die unterschiedlichen Wellenlängen bringen ein unterschiedliches Brechungsverhalten und unterschiedliche Fokuslagen mit sich. Dies kann erhebliche Veränderungen in der Fokuslage und in der Fokussierbrennweite Ff mit sich bringen, wobei die Abweichungen z.B. mehr als 50 mm betragen können. Diese Unterschiede lassen sich mit der Stelleinrichtung (21) über einen Offset (32) im optischen Abstand b ausgeglichen.

Der Pilotlaserstrahl (31) wird von einem Pilotlaser (29) erzeugt, der in der Laserquelle (8) untergebracht oder extern angeordnet sein. Der Pilotlaserstrahl (31) wird bei einer Einkoppeleinrichtung (30) in den Strahlengang des Arbeitslaserstrahls (10) und in den Lichtwellenleiter (11) eingekoppelt. Die Einkoppeleinrichtung (30) kann z.B. mehrere Spiegel, darunter auch teildurchlässige Spiegel aufweisen. Der statt des Arbeitslaserstrahls eingekoppelte Pilotlaserstrahl (31) erzeugt am Werkstück (5) einen optisch sichtbaren Brennpunkt (28).

Für den Pilotlaserstrahl (31) wird der optische Abstand b auf einen wählbaren Vorgabewert eingestellt und in dieser Position festgehalten. Dies kann in den verschiedenen vorbeschriebenen Weisen geschehen, z.B. durch Verschieben des Leiterauskoppelpunkts (12). Im nächsten Schritt wird das Laserwerkzeug (7) gegenüber dem Werkstück (5) in einer Relativbewegung in Strahlrichtung (16) so lange angenähert oder entfernt, bis an der Werkstückoberfläche der Brennpunkt (28) in Korrelation mit dem Fokus (27) steht. In dieser Position hat der Brennpunkt (28) z.B. eine scharf umrissene und optisch sichtbare Kontur. Bei dieser Annäherungsbewegung ist der Pilotlaserstrahl (31) bzw. dessen Strahlengang (16) vorzugsweise im wesentlichen senkrecht zur offenen Werkstückoberfläche ausgerichtet, wobei auch die Relativbewegung in dieser Stahlrichtung (16) erfolgt. Die Relativbewegung kann durch eine vom Manipulator (2) ausgeführte Bewegung des Laserwerkzeugs (7) zum ortsfesten Werkstück (5) oder mit kinematischer Umkehr geschehen. Sobald die gewünschte Korrelation zwischen Fokus (27), Brennpunkt (28) und TCP gefunden ist, wird die entsprechende Position des Manipulators (2) in der Steuerung (4) gespeichert. Die Relativbewegung zwischen Laserwerkzeug (7) und Werkstück (5) kann von einem Bediener per Handsteuerung des Manipulators (2) durchgeführt werden.

Im nächsten Schritt wird der Pilotlaserstrahl (31) abgeschaltet und der optische Abstand b um eine Offsetstrecke (32) verändert, die dem Wellenlängenunterschied zwischen Arbeits- und Pilotlaserstrahl entspricht, wobei z.B. der Leiterauskoppelpunkt (12) verfahren wird. Bei einem längerwelligen Arbeitslaserstrahl (10) wird der Leiterauskoppelpunkt (12) zurückverfahren und der optische Abstand b vergrößert. Durch diese Korrektur, die ebenfalls von der Steuerung (4) veranlasst wird, hat die Stelleinrichtung (21) eine korrekte Einstellung bezüglich der TCP-Lage auf dem Werkstück (5). Die Position des Linearantriebs (22) bzw. des Leiterauskoppelpunktes (12) wird ebenfalls in der Steuerung (4) gespeichert. Der Teachvorgang ist somit abgeschlossen.

Wenn der Leiterauskoppelpunkt (12) nach dem Teachen eine bestimmte Position haben soll, wird der Offset (32) hiervon ausgehend bei der Vorgabeposition für den Pilotlaserstrahl (31) berücksichtigt. Der Leiterauskoppelpunkt (12) wird dazu um den Offset (32) nach vorn verschoben und der optische Abstand b entsprechend der kürzeren Wellenlänge des Pilotlaserstrahls (31) verkleinert.

Eine analoge Vorgehensweise ergibt sich, wenn der optische Abstand b in der vorbeschriebenen Weise durch eine anspruchsgemäße Bewegung der Kollimations- oder Laseroptik (15,13) und evtl. der Streuoptik (35) verändert wird.

Der Pilotlaserstrahl (31) kann außerdem zum Teachen und Einstellen der Justiereinrichtung (33) und der Seiten- und Querlage des Laserstrahls verwendet werden. Hierzu wird z.B. das Laserwerkzeug (7) vom Manipulator (2) in einer vorgegebenen Solllage gegenüber dem Werkstück (5) und einem dortigen Referenz-Merkmal, z.B. einem optischen Punkt, positioniert. Die Solllage ist nach Position und Orientierung so gewählt, dass bei vorgegebener Einstellung der Stelleinrichtung (21) der Pilotlaserstrahl (31) mit dem Fokus (27) genau auf diesen Referenzpunkt treffen muss. Wenn eine Seitenabweichung besteht, kann die Justiereinrichtung (33) entsprechend zur Korrektur nachgestellt werden.

Bei Laseroptiken (13) mit energiereichen Laserstrahlen, insbesondere Schweiß- oder Schneidoptiken, kann es durch die Erwärmung der Schweißoptik zu einem sogenannten "Fokusshift" kommen. Durch den Temperaturgradienten in den Optikkomponenten verändert sich deren optisches Verhalten und es kann sogar zu einer minimalen Verformung dieser Optikkomponenten kommen. Die Folge ist eine Verschiebung des Fokuspunktes (27) in Strahlrichtung (16). Die Richtung der Verschiebung ist vom gewählten Aufbau der Laseroptik (13) abhängig und kann mehr als 5 mm betragen. Mit der Stelleinrichtung (31) ist eine Korrektur und Kompensation dieses Fokusshifts möglich.

Dies kann auf verschiedene Weise geschehen. Einerseits kann durch eine Temperatur- oder Wärmemessung innerhalb der Laseroptik (13) mit ein oder mehreren geeigneten Wärmemesseinrichtungen (34), z.B. Temperatursensoren, das Temperaturverhalten der Laseroptik (13) ermittelt und überwacht werden. Diesen Temperaturwerten können mittels einer Korrelationstabelle empirisch oder auf andere Weise ermittelte Lageänderungen oder Verschiebungen des Fokus (27) zugeordnet werden, die sich mittels der Stelleinrichtung (21) manuell oder automatisch kompensieren lassen. Hierbei kann den Temperaturwerten auch gleich tabellarisch ein Kompensationsfaktor oder Stellwert für die Stelleinrichtung (21) zugeordnet sein. Alternativ kann ein Fokusshift auch auf beliebig andere geeignete Weise detektiert und signalisiert werden.

Die Tabelle kann in der Steuerung (4) hinterlegt werden, so dass die Fokusshift-Kompensation bei signifikanten Temperaturänderungen automatisch durchgeführt werden kann. Dies ist zugleich eine Regelung des Fokuspunktes (27) mittels der Autofokus-Funktion. Ansonsten ist auch eine manuelle Nachjustierung möglich, indem das Laserwerkzeug (7) in einer vorbestimmten Position zum Werkstück (5) gebracht wird und in der vorbeschriebenen Weise mit dem Pilotlaserstrahl (31) über die Brennfleckbetrachtung eine Nachjustierung erfolgt.

Abwandlungen der gezeigten Ausführungsformen sind in verschiedener Weise möglich. Dies betrifft die konstruktive Gestaltung des Laserwerkzeugs (7), der Laserquelle (8), der Leitung (9) und anderen Teile der Lasereinrichtung (6). Z.B. kann ein Strahlteiler vorhanden sein, der den eintreffenden Laserstrahl (10) in zwei oder mehr Teilstrahlen aufspaltet. Ferner ist es möglich, mit Strahlbündeln oder Faserbündeln zu arbeiten und somit die Kontur des aus mehreren Teilstrahlen aufgebauten Laserstrahls (10,31) zu ändern. Auch die anderen Bestandteile der Laserzelle (1) sind konstruktiv abwandelbar. Variabel ist auch die Kinematik bzw. die Verstellbarkeit der Leiteraufnahme (20) bzw. des Leiterauskoppelpunkts (12) und der Optiken (13,14,15,35). Wie bereits vorstehend zu Figur 16 und 17 erwähnt, kann z.B. die Streuoptik (35) längs der Strahlrichtung (16) beweglich gelagert und dabei z.B. über ein in der Länge verstellbares Koppelglied mit der Verstelleinrichtung (21) der beweglichen Leiteraufnahme (20) verbunden sein. Anspruchsgemäß besteht eine solche Kopplung zwischen der Streuoptik (35) und der Kollimationsoptik (15) bzw. der Laseroptik (13). Durch diese im Abstand veränderlichen Koppelungen kann sich die Streuoptik (35) synchron mit der Kollimations- bzw. Laseroptik (15,13) bewegen. Das Koppelglied kann z.B. ein Fahrschlitten sein, auf dem die Streuoptik (35) verstellbar befestigt ist. Ggf. kann an dieser Befestigungsstelle die Stelleinrichtung (21") vorhanden sein, so dass die Position der Streuoptik (35) auf dem Schlitten ferngesteuert verstellt werden kann. Diese Kopplung ist vor allem bei einem gestreckten Strahlengang (16) einsetzbar, lässt sich mittels einer biegsamen Kopplung aber auch bei einem abgewinkelten Laserwerkzeug (7) mit Umlenkspiegel (18) einsetzen.

### BEZUGSZEICHENLISTE

- 1: Laserzelle
- 2: Manipulator, Roboter
- 3: Manipulatoranschluss, Roboterhand
- 4: Steuerung, Robotersteuerung
- 5: Werkstück
- 6: Lasereinrichtung
- 7: Laserwerkzeug, Laserkopf
- 8: Laserquelle
- 9: Leitung
- 10: Laserstrahl
- 11: Lichtwellenleiter, Leitfaser
- 12: Leiterauskoppelpunkt, Auskoppelpunkt
- 13: Laseroptik
- 14: Fokussieroptik
- 15: Kollimationsoptik
- 16: Strahlrichtung, Strahlengang
- 17: Gehäuse
- 18: Spiegel
- 19: Anschluss für Lichtwellenleiter
- 20: Leiteraufnahme, Faserstecker
- 21: Stelleinrichtung
- 21': Stelleinrichtung
- 21": Stelleinrichtung
- 22: Linearantrieb
- 23: Leitung, Steuerleitung
- 24: Antriebsgehäuse
- 25: Stellglied
- 26: Messeinrichtung, Weggeber
- 27: Fokus
- 28: Brennpunkt
- 29: Pilotlaser
- 30: Einkoppeleinrichtung
- 31: Pilotlaserstrahl
- 32: Offset, Offset-Strecke
- 33: Justiereinrichtung
- 34: Messeinrichtung, Wärmefühler
- 35: Streuoptik, Streulinse

- a: Arbeitsabstand Laserwerkzeug
- b: optischer Abstand Leiterauskoppelpunkt von Kollimationsoptik

- Ff: Brennweite Fokussieroptik, Fokussierbrennweite
- Fk: Brennweite Kollimationsoptik, Kollimationsbrennweite

## Patentansprüche

1. Verfahren zum Betrieb einer Lasereinrichtung (6) mit einem Laserwerkzeug (7), welches eine Laseroptik (13) mit einer Fokussier- und einer Kollimationsoptik (14,15) sowie einen Anschluss (19) für einen Lichtwellenleiter (11) mit einem Leiterauskoppelpunkt (12) aufweist,
wobei die Brennweite (Ft) der Fokussieroptik (14) durch Verstellen des optischen Abstands (b) des Leiterauskoppelpunktes (12) von der Kollimationsoptik (15) verändert wird, wobei die Kollimationsoptik (15) in Strahlrichtung (16) mittels einer motorisch angetriebenen Stelleinrichtung (21') fernsteuerbar verschoben wird, und wobei die Stelleinrichtung (21') mit der Steuerung (4) eines mehrachsigen Manipulators (2) verbunden wird, der das Laserwerkzeug (7) oder ein Werkstück (5) führt, wobei die Bewegungen der Stelleinrichtung (21') und des Manipulators (2) mathematisch verknüpft werden.

2. Verfahren nach Anspruch 1, **dadurch gekennzeichnet, dass** die Größe des Brennflecks (28) am Werkstück (5) durch Verstellen des optischen Abstands (b) und/oder durch Verstellen einer Streuoptik (35) relativ zum Leiterauskoppelpunkt (12) verändert wird.

3. Verfahren nach Anspruch 1 oder 2, **dadurch gekennzeichnet, dass** die Brennweite (Ff) der Fokussieroptik (14) und/oder die Größe des Brennflecks (28) in einem Autofokus-System bei Orientierungsänderungen des Laserwerkzeugs (7) automatisch nachgeführt wird.

4. Verfahren nach Anspruch 1, 2 oder 3, **dadurch gekennzeichnet, dass** die Brennweite (Ff) der Fokussieroptik (14) bei einem Fokusshift des Laserwerkzeugs (7) automatisch oder manuell nachgeführt wird.

5. Verfahren nach einem der vorhergehenden Ansprüche, **dadurch gekennzeichnet, dass** zum Teachen des Laserwerkzeugs (7) und der Stelleinrichtung (21) sowie des Manipulators (2) ein optisch sichtbarer Pilotlaserstrahl (31) in den Lichtwellenleiter (11) eingekoppelt und vom Laserwerkzeug (7) aus einer Soll-Lage auf ein zu bearbeitendes Werkstück (5) gerichtet wird, wobei die Stelleinrichtung (21', 21") und/oder der Manipulator (2) manuell bis zur korrekten Abbildung des Brennpunktes (28) auf dem Werkstück (5) nachgeführt wird.

6. Verfahren nach Anspruch 5, **dadurch gekennzeichnet, dass** zum Teachen der optische Abstand (b) automatisch um eine den unterschiedlichen Wellenlängen von Pilot- und Arbeitslaserstrahl entsprechende Offset-Strecke (32) verstellt wird.

7. Lasereinrichtung mit einem Laserwerkzeug (7), welches eine Laseroptik (13) mit einer Fokussier- und einer Kollimationsoptik (14,15) sowie einen Anschluss (19) für einen Lichtwellenleiter (11) mit einem Leiterauskoppelpunkt (12) aufweist,
wobei das Laserwerkzeug (7) eine motorisch angetriebene Stelleinrichtung (21') an der Kollimationsoptik (15) zum Verstellen des optischen Abstands (b) der Kollimationsoptik (15) vom Leiterauskoppelpunkt (12) für eine Veränderung der Brennweite Ff der Fokussieroptik (14) aufweist, und wobei die Stelleinrichtung (21') mit der Steuerung (4) eines mehrachsigen Manipulators (2) verbunden ist, der das Laserwerkzeug (7) oder ein Werkstück (5) führt, wobei die Bewegungen der Stelleinrichtung (21') und des Manipulators (2) mathematisch verknüpft sind.

8. Lasereinrichtung nach Anspruch 7, **dadurch gekennzeichnet, dass** das Laserwerkzeug (7) mindestens eine Stelleinrichtung (21") zum Verstellen einer Streuoptik (35) relativ zum Leiterauskoppelpunkt (12) aufweist.

9. Lasereinrichtung nach Anspruch 7 oder 8, **dadurch gekennzeichnet, dass** die Stelleinrichtung (21',21") einen steuerbaren Linearantrieb (22) aufweist.

10. Lasereinrichtung nach Anspruch 9, **dadurch gekennzeichnet, dass** der Linearantrieb (22) ein hohles Antriebsgehäuse (24) mit einem innenseitig axial motorisch verschieblichen Stellglied (25) aufweist, an dem die Kollimationsoptik (15) oder die Streuoptik (35) befestigt ist.

11. Lasereinrichtung nach Anspruch 9 oder 10, **dadurch gekennzeichnet, dass** der Linearantrieb (22) eine Messeinrichtung (26) zur Wegmessung des Stellglieds (25) aufweist.

12. Lasereinrichtung nach einem der Ansprüche 9 bis 11, **dadurch gekennzeichnet, dass** der Linearantrieb (22) eine programmierbare Steuerung mit einer Recheneinheit und mit mindestens einem Datenspeicher für Programme, Wegmessvverte und Offset-Werte aufweist.

13. Lasereinrichtung nach einem der Ansprüche 9 bis 12, **dadurch gekennzeichnet, dass** der Linearantrieb (22) mit der Steuerung (4) des mehrachsigen Manipulators (2) verbunden ist, der das Laserwerkzeug (7) oder das Werkstück (5) führt.

14. Lasereinrichtung nach einem der Ansprüche 7 bis 13, **dadurch gekennzeichnet, dass** die Stelleinrichtung (21',21") als Autofokus-System ausgebildet ist, welches die Brennweite (Ff) bei Orientierungsänderungen des Laserwerkzeugs (7) automatisch nachführt.

15. Lasereinrichtung nach einem der Ansprüche 7 bis 14, **dadurch gekennzeichnet, dass** die Stelleinrichtung (21',21") als automatische oder manuelle Nachführeinrichtung für einen Fokusshift ausgebildet und mit einer Wärmemesseinrichtung (34) im oder am Laserwerkzeug (7) verbunden ist.

16. Lasereinrichtung nach einem der Ansprüche 7 bis 15, **dadurch gekennzeichnet, dass** die Laseroptik (13) eine relativ zueinander ortsfeste Fokussier- und Kollimationsoptik (14,15) aufweist.

17. Lasereinrichtung nach einem der Ansprüche 7 bis 16, **dadurch gekennzeichnet, dass** die Brennweite (Fk) der Kollimationsoptik (15) kleiner als die Brennweite (Ff) der Fokussieroptik (14) ist.

18. Lasereinrichtung nach einem der Ansprüche 7 bis 17, **dadurch gekennzeichnet, dass** die Ausgangs-Brennweite (Ff) der Fokussieroptik (14) größer als 500 mm ist.

19. Lasereinrichtung nach einem der Ansprüche 7 bis 18. **dadurch gekennzeichnet, dass** die Lasereinrichtung (6) eine Laserquelle (8) für Arbeitslaserlicht und einen Pilotlaser (29) für ein optisch sichtbares Pilotlaserlicht (31) sowie eine Einrichtung (30) zur Einkopplung des Pilotlaserlichts in den Lichtwellenleiter (11) aufweist.

## Claims

1. Method for operating a laser device (6) with a laser tool (7), comprising a laser lens system (13) with a focusing lens system (14) and a collimating lens system (15) and also a connection (19) for an optical waveguide (11) with a waveguide decoupling point (12),
wherein the focal length (Ff) of the focusing lens system (14) is changed by adjusting the optical distance (b) of the waveguide decoupling point (12) from the collimating lens system (15), the collimating lens system (15) being displaced in the direction of the beam (16) in a remote-controllable manner by means of a motor-driven adjusting device (21'), and wherein the adjusting device (21') is connected to the control (4) of a multiaxial manipulator (2) which guides the laser tool (7) or a workpiece (5), the movements of the adjusting device (21') and the manipulator (2) being mathematically linked.

2. Method according to Claim 1, **characterized in that** the size of the focal point (28) on the workpiece (5) is changed by adjusting the optical distance (b) and/or by adjusting a diffusing lens system (35) in relation to the waveguide decoupling point (12).

3. Method according to Claim 1 or 2, **characterized in that** the focal length (Ff) of the focusing lens system (14) and/or the size of the focal point (28) are readjusted automatically in an autofocus system in the event of changes in the orientation of the laser tool (7).

4. Method according to Claim 1, 2 or 3, **characterized in that** the focal length (Ff) of the focusing lens system (14) is readjusted automatically or manually in the event of a focus shift of the laser tool (7).

5. Method according to one of the preceding claims, **characterized in that**, for teaching the laser tool (7) and the adjusting device (21) and also the manipulator (2), an optically visible pilot laser beam (31) is coupled into the optical waveguide (11) and directed by the laser tool (7) from a setpoint position onto a workpiece (5) to be processed, the adjusting device (21', 21") and/or the manipulator (2) being readjusted manually until the focal point (28) is projected correctly onto the workpiece (5).

6. Method according to Claim 5, **characterized in that**, for teaching, the optical distance (b) is adjusted automatically by an offset path (32) which corresponds to the different wavelengths of the pilot laser beam and the working laser beam.

7. Laser device with a laser tool (7), comprising a laser lens system (13) with a focusing lens system (14) and a collimating lens systems (15) and also a connection (19) for an optical waveguide (11) with a waveguide decoupling point (12),
wherein the laser tool (7) has a motor-driven adjusting device (21') on the collimating lens system (15) for adjusting the optical distance (b) of the collimating lens system (15) from the waveguide decoupling point (12) for changing the focal length Ff of the focusing lens system (14), and wherein the adjusting device (21') is coupled to the control (4) of a multiaxial manipulator (2) which guides the laser tool (7) or a workpiece (5), wherein the movements of the adjusting device (21') and the manipulator (2) are mathematically linked.

8. Laser device according to Claim 7, **characterized in that** the laser tool (7) has at least one adjusting device (21") for adjusting a diffusing lens system (35) in relation to the waveguide decoupling point (12).

9. Laser device according to Claim 7 or 8, **characterized in that** the adjusting device (21', 21") has a controllable linear drive (22).

10. Laser device according to Claim 9, **characterized in that** the linear drive (22) has a hollow drive housing (24) with an adjusting member (25) which is axially displaceable on the inner side by means of a motor and to which the collimating lens system (15) or the diffusing lens system (35) is attached.

11. Laser device according to Claim 9 or 10, **characterized in that** the linear drive (22) has a measuring device (26) for measuring the path of the adjusting member (25).

12. Laser device according to one of Claims 9 to 11, **characterized in that** the linear drive (22) has a programmable control with a computing unit and with at least one data memory for programs, measured path values and offset values.

13. Laser device according to one of Claims 9 to 12, **characterized in that** the linear drive (22) is connected to the control (4) of a multiaxial manipulator (2) which guides the laser tool (7) or the workpiece (5).

14. Laser device according to one of Claims 7 to 13, **characterized in that** the adjusting device (21', 21") is designed as an autofocus system which automatically readjusts the focal length (Ff) in the event of changes in the orientation of the laser tool (7).

15. Laser device according to one of Claims 7 to 14, **characterized in that** the adjusting device (21', 21") is designed as an automatic or manual readjusting device for a focus shift and is connected to a heat-measuring device (34) in or on the laser tool (7).

16. Laser device according to one of Claims 7 to 15, **characterized in that** the laser lens system (13) has a focusing lens system (14) and a collimating lens system (15) that are stationary in relation to one another.

17. Laser device according to one of Claims 7 to 16, **characterized in that** the focal length (Fk) of the collimating lens system (15) is less than the focal length (Ff) of the focusing lens system (14).

18. Laser device according to one of Claims 7 to 17, **characterized in that** the initial focal length (Ff) of the focusing lens system (14) is greater than 500 mm.

19. Laser device according to one of Claims 7 to 18, **characterized in that** the laser device (6) has a laser source (8) for working laser light and a pilot laser (29) for an optically visible pilot laser light (31) and also a device (30) for coupling the pilot laser light into the optical waveguide (11).

## Revendications

1. Procédé de mise en fonctionnement d'un dispositif laser (6) comportant un outil laser (7) qui comprend une optique laser (13), munie d'un optique de focalisation et de collimation (14, 15), ainsi qu'un connecteur (19) destiné à un guide d'ondes optique (11) ayant un point de sortie (12),
dans lequel la distance focale (Ff) de l'optique de focalisation (14) est modifiée par réglage de la distance optique (b) du point de sortie de guide (12) de l'optique de collimation (15), dans lequel l'optique de collimation (15) est décalée dans la direction du faisceau (16) d'une manière pouvant être commandée à distance au moyen d'un dispositif de réglage (21') entraîné par moteur, et dans lequel le dispositif de réglage (21') est connecté à l'unité de commande (4) d'un manipulateur à axes multiples (2) qui guide l'outil laser (7) ou une pièce à usiner (5), dans lequel les mouvements du dispositif de réglage (21) et du manipulateur (2) sont combinés mathématiquement.

2. Procédé selon la revendication 1, **caractérisé en ce que** la taille du foyer (28) au niveau de la pièce à usiner (5) est modifiée par réglage de la distance optique (b) et/ou par réglage d'une optique de commande (35) par rapport au point de sortie (12).

3. Procédé selon la revendication 1 ou 2, **caractérisé en ce que** la distance focale (Ff) de l'optique de focalisation (14) et/ou la taille du foyer (28) est asservie automatiquement dans un système de mise au point automatique lors de modifications d'orientation de l'outil laser (7).

4. Procédé selon la revendication 1, 2 ou 3, **caractérisé en ce que** la distance focale (Ff) de l'optique de focalisation (14) est asservie automatiquement ou manuellement lors d'un décalage du foyer de l'outil laser (7).

5. Procédé selon l'une quelconque des revendications précédentes, **caractérisé en ce que**, pour l'apprentissage de l'outil laser (7) et du dispositif de réglage (21) ainsi que du manipulateur (2), un faisceau laser pilote (31) visible optiquement est injecté dans le guide d'ondes optique (11) et est dirigé d'une position nominale vers une pièce à usiner (5) devant être traitée par l'outil laser (7), dans lequel le dispositif de réglage (21', 21") et/ou le manipulateur (2) est/sont asservi(s) manuellement jusqu'à ce qu'une image correcte du foyer (28) soit formée sur la pièce à usiner (5).

6. Procédé selon la revendication 5, **caractérisé en ce que**, pour l'apprentissage, la distance optique (b) est automatiquement ajustée d'une course de décalage (32) correspondant à différentes longueurs d'onde du faisceau laser pilote et de travail.

7. Dispositif laser comportant un outil laser (7) qui comprend une optique laser (13) munie d'une optique de focalisation et de collimation (14, 15) et d'un connecteur (19) destiné à un guide d'ondes optique (11) présentant un point de sortie de guide (12),
dans lequel l'outil laser (7) comporte un dispositif de réglage (21') entraîné par moteur sur l'optique de collimation (15) pour ajuster la distance optique (b) de l'optique de collimation (15) par rapport au point de sortie de guide (12) pour modifier la distance focale Ff de l'optique de focalisation (14), et dans lequel le dispositif de réglage (21') est connecté à l'unité de commande (4) d'un manipulateur à axes multiples (2) qui guide l'outil laser (7) ou une pièce à usiner (5), dans lequel les mouvements du dispositif de réglage (21') et du manipulateur (2) sont combinés mathématiquement.

8. Dispositif laser selon la revendication 7, **caractérisé en ce que** l'outil laser (7) comporte au moins un dispositif de réglage (21") destiné à ajuster une optique de commande (35) par rapport au point de sortie (12).

9. Dispositif laser selon la revendication 7 ou 8, **caractérisé en ce que** le dispositif de réglage (21', 21") comporte un entraînement linéaire (22) pouvant être commandé.

10. Dispositif laser selon la revendication 9, **caractérisé en ce que** l'entraînement linéaire (22) comporte un boîtier d'entraînement creux (24) muni d'un élément de réglage (25) pouvant être déplacé axialement sur la face intérieure par moteur, sur lequel est fixée l'optique de collimation (15) ou l'optique de diffusion (35).

11. Dispositif laser selon la revendication 9 ou 10, **caractérisé en ce que** l'entraînement linéaire (22) comporte un dispositif de mesure (26) destiné à mesurer le déplacement de l'élément de réglage (25).

12. Dispositif laser selon l'une quelconque des revendications 9 à 11, **caractérisé en ce que** l'entraînement linéaire (22) comporte une unité de commande programmable munie d'une unité de calcul et d'au moins une mémoire de données destinée à des programmes, des valeurs de mesure de déplacement et des valeurs de décalage.

13. Dispositif laser selon l'une quelconque des revendications 9 à 12, **caractérisé en ce que** l'entraînement linéaire (22) est connecté à l'unité de commande (4) d'un manipulateur (2) à plusieurs axes qui guide l'outil laser (7) ou la pièce à usiner (5).

14. Dispositif laser selon l'une quelconque des revendications 7 à 13, **caractérisé en ce que** le dispositif de réglage (21', 21") est réalisé sous la forme d'un système à mise au point automatique qui asservit automatiquement la distance focale (Ff) lors de modifications d'orientation de l'outil laser (7).

15. Dispositif laser selon l'une quelconque des revendications 7 à 14, **caractérisé en ce que** le dispositif de réglage (21', 21") est réalisé sous la forme d'un dispositif d'asservissement automatique ou manuel destiné à un décalage de mise au point et **en ce qu'**il est connecté à un dispositif de mesure de chaleur (34) dans ou sur l'outil laser (7).

16. Dispositif laser selon l'une quelconque des revendications 7 à 15, **caractérisé en ce que** l'optique laser (13) comporte des outils de focalisation et de collimation (14, 15) stationnaires l'un par rapport à l'autre.

17. Dispositif laser selon l'une quelconque des revendications 7 à 16, **caractérisé en ce que** la distance focale (Fk) de l'optique de collimation (15) est inférieure à la distance focale (Ff) de l'optique de focalisation (14).

18. Dispositif laser selon l'une quelconque des revendications 7 à 17, **caractérisé en ce que** la distance focale de sortie (Ff) de l'optique de collimation (14) est supérieure à 500 mm.

19. Dispositif laser selon l'une quelconque des revendications 7 à 18, **caractérisé en ce que** le dispositif laser (6) comporte une source laser (8) destinée à une lumière de travail et un laser pilote (29) destiné à une lumière laser pilote (31) visible optiquement ainsi qu'un dispositif (30) destiné à injecter la lumière laser pilote dans le guide d'ondes optique (11).
